Europäisches Patentamt

European Patent Office

Office européen des brevets

(11) Publication number: **0 154 061**
**A2**

# EUROPEAN PATENT APPLICATION

(21) Application number: **84301312.9**

(22) Date of filing: **29.02.84**

(51) Int. Cl.⁴: **B 29 C 47/30**
**B 30 B 11/22**

(43) Date of publication of application:
**11.09.85 Bulletin 85/37**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Huang, Yun-Yang**
**98 William Feather Drive**
**Voorhees New Jersey 08043(US)**

(72) Inventor: **Rosinski, Edward Joseph**
**Box A**
**Pedricktown New Jersey 08067(US)**

(74) Representative: **West, Alan Harry**
**Mobil Court 3 Clements Inn**
**London WC2A 2EB(GB)**

(54) **An extrusion die.**

(57) An extrusion die comprises a inner plate 11 mounted within an annular outer plate 12. Shaped extrusion orifices 20, from which the material being extruded is emitted, are defined by aligned grooves 15, 18 formed at the mating edge surfaces of the inner and outer plates 11, 12 respectively. The die may be fabricated utilizing conventional equipment and may be employed to achieve detailed cross sectional configurations of extruded materials.

EP 0 154 061 A2

F-1456

## AN EXTRUSION DIE

This invention relates to an extrusion die for use with materials such as molten thermoplastics, solutions such as viscose-like solutions which upon extrusion may be solidified by passage into a coagulation bath, cellulose acetate, and paste-like slurries of materials which, upon extrusion, may become hardened and further solidified by heating or calcining where it is desired to impart a particular cross sectional shape to the form which is being extruded.

In a common technique employed for the extrusion of plastic and thermoplastics materials, the material to be extruded is fed to the hopper of a rotating screw type extruder. The rotating screw carries the material along to the terminal end of the extruder where it is expressed through a die orifice. The material may be melted during its transit along the rotating screw by the heat which is generated as the material is compacted and subjected to the friction which exists between the extruder barrel and the screw. Alternatively, the material may be positively heated while it is within the extruder by heating jackets arranged externally on the surface of the extruder barrel. Conversely, in those cases where undesirably high levels of heat are generated in situ by the material being advanced between the screw and the extruder barrel, the external surface of the extruder barrel may be cooled to control the temperature of the material within the extruder.

In the extrusion of, for example, plastics films, it is known to cause the material as it leaves the extruder screw to pass into a die body and be expressed therefrom through a pair of closely aligned lips whereby a thin film is produced. Such extrusion of a flat film is referred to as either film extrusion or casting, the latter expression being taken from the fact that on extrusion from the slit orifice the semi-molten film is cast upon the surface of an internally cooled rotating roller to further cool the film and set it.

In the extrusion of synthetic textiles, it is known to extrude materials such as cellulose acetate, nylon, polyester, acrylics and modified acrylics through a die which is generally referred to as a spinneret. The spinneret is a plate, usually a metallic plate, which is affixed to the end of the extruder through which the extruded material passes. Generally the plate has a plurality of small circular orifices therein whereby cylindrical shaped fibers are extruded through the spinneret plate. Often it is desirable to alter the cylindrical cross sectional of the synthetic fibers being produced by altering the shape of the orifice in the spinneret plate. Accordingly, a square fiber, a crescent-shaped fiber, a multi-lobal fiber, a hollow fiber, and the like may all be produced by causing a design change in the individual orifices of the spinneret. The reason for varying the cross section of the synthetic fibers may be to form fibrous material which has improved loft or handle or, for example, to improve the filtration characteristics of fibers which may eventually be employed in filtration operations.

Other materials which may be extruded through the spinneret-like plates described hereinabove include aqueous slurries of, for example, materials which will eventually be employed as catalysts in, for example, crude or refined lubricant processing. Thus it is known to produce catalyst extrudate by forming a hydrated, powdered mixture of alumina, either by itself, or in admixture with other materials such as zeolites. This powdered mixture is fed to the hopper of a rotating screw-type extruder. The material charged is then transported by the rotating screw as it is being compacted and pressed and heated within the confines of the extruder barrel, whereby the powder is transformed into a plastic high-solids content material which is extrudable. The extrudable material is then passed through an orifice in a die face plate (e.g., a spinneret) and is subsequently calcined to solidify and harden the material.

It is known to produce such catalytic material with a non-cylindrical cross-section by shaping the orifice in the die plate in accordance with the shape of the cross section desired for the final catalyst. Cross sectional shapes such as multi-lobal,

cloverleaf sections are desirable in certain catalyst applications, such shapes being resistant to crushing under the high operating pressures that are sometimes encountered in refining operations. These shapes additionally offer a low pressure drop environment and high diffusion rates which in most instances are desirable in refining operations. Additionally, such variations in cross-section result in an increased surface to mass ratio which is advantageous in those applications when increased surface area improves the catalytic process. U.S Patent No. 3,764,565 discloses various useful shapes of catalyst particles which may be formed utilizing the present apparatus.

In order to produce an extrudate of non-cylindrical cross section, it is necessary to provide an extrusion die with correspondingly shaped holes.It has, however, been found that conventional drilling machines have very limited use in producing extrusion dies with complex shaped holes and that other machining techniques, such as electrical discharge machining or laser drilling, must be used for holes which are non-circular. Such techniques are time consuming and expensive. Moreover, the former technique is applicable to metals only, whereas the latter is effective for only relatively thin plates of non-metallic materials.

In accordance with the present invention, there is provided an extrusion die comprising an outer plate and an inner plate, said inner plate adapted to be in mating engagement and in fixed concentric orientation in a centrally located opening in said outer plate, said inner and outer plates having outer and inner edge surfaces respectively which define at least one orifice when said plates are in mating engagement and in concentric relation, and said inner and outer plates having inter-engageable location means for aligning said inner and outer plates to define said orifice in a predetermined shape and location.

The extrusion die of the invention may be produced utilizing conventional equipment, such as for example, a shaping tool whose cutting edge has a contour of part of an extrusion orifice of the desired shape. The die plates may then be machined on a milling machine with a slotter attachment.

In the accompanying drawings, wnich illustrate one example of the invention,

Figure 1 is an exploded view of component parts of an extrusion die assembly,

Figure 2 is an overhead planar view, partially broken away, of the assembled die,

Figure 3 is cross sectional view taken along the line 3-3 in Figure 2,

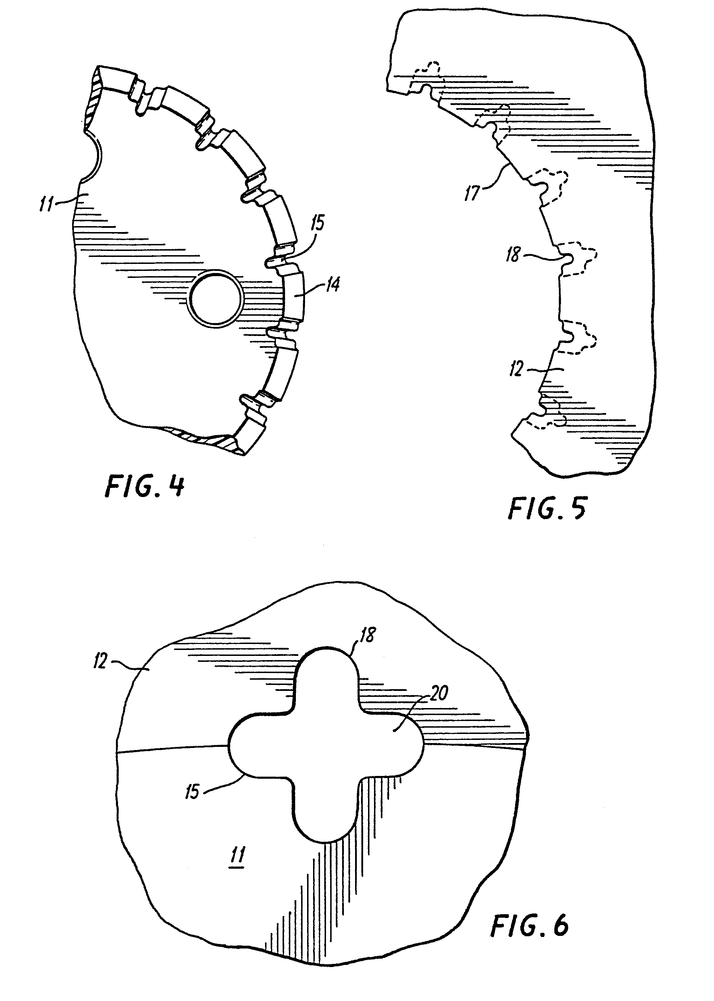

Figure 4 is a fragmentary, enlarged view of a portion of the inner plate member shown in Figure 1,

Figure 5 is an enlarged, fragmentary view of a portion of the outer die plate shown in Figure 1, and

Figure 6 is an enlarged, fragmentary view of one of the apertures formed by the joining edges of the inner plate and outer plate as shown in Figure 1.

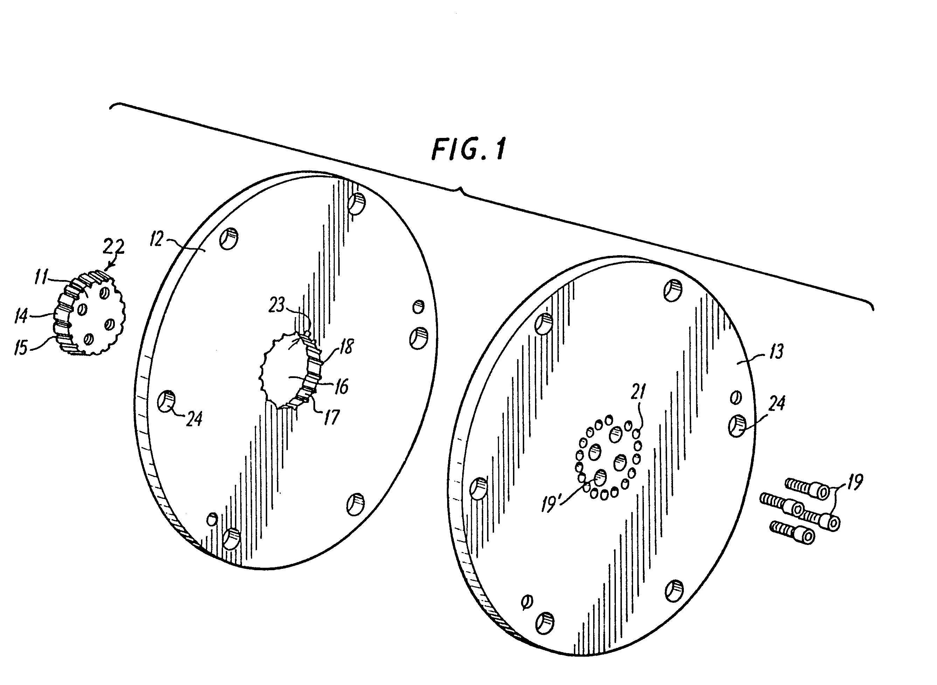

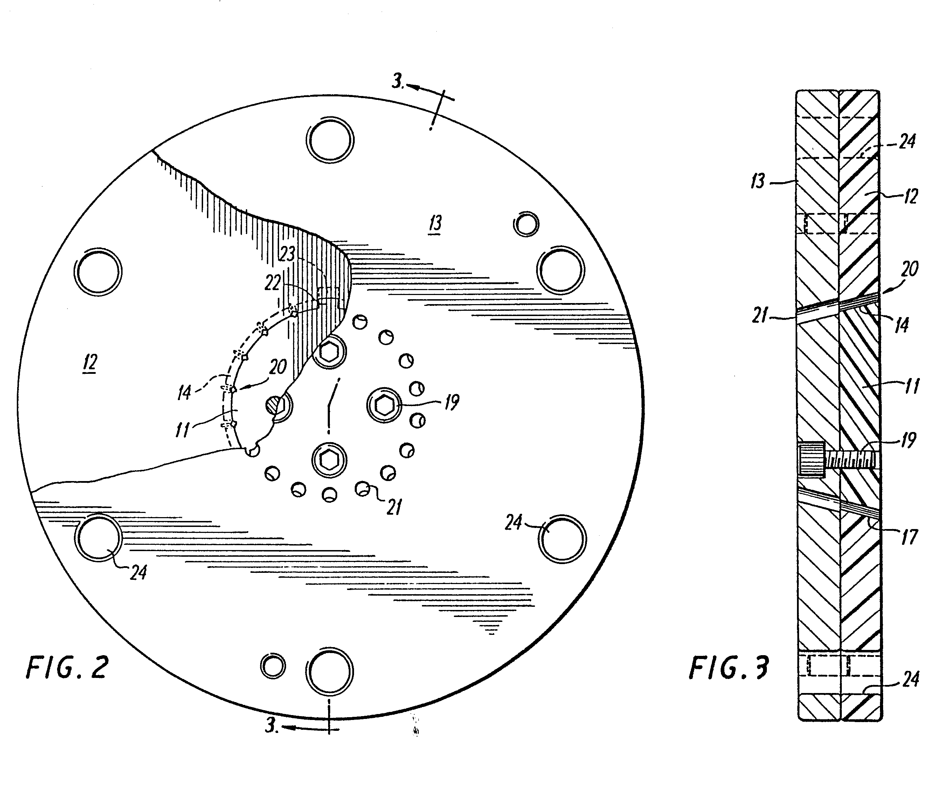

Referring to the drawings, the die assembly includes an inner plate 11, which is adapted to fit into a centrally located aperture 16 of an outer plate 12. As snown in Figure 1, the peripheral edge 14 of the inner plate 11 is tapered to insure a snug fit into central aperture 16 of outer plate 12. Further, since the flow of material being extruded under pressure may tend to cause dislodgement of inner plate 11, the taper configuration resists this force. To insure proper support of inner plate 11 and outer plate 12 in use, a support plate 13 is provided which, in the assembled die, bears flush against the inner plate 11 and outer plate 12 as shown in Figure 3. Retaining bolts 19 are adapted for insertion into retaining bolt holes 19' located in support plate 13 to secure the complete assembly and holes 24 are provided around the outer periphery of plates 13 and 12 to accommodate support bolts for affixing the die assembly to an extruder.

Machined around the outside edges of the inner plate 11 are a plurality of grooves 15 which each define part of a die orifice 20 of the desired configuration wnich, in the example shown, is of a quadralobe or clover-leaf shape. Similarly grooves 18 are formed around the inside edge of the outer plate 12 as defined by the aperture 16, with each groove 18 defining the remainder of a respective die orifice 20.  Thus when the inner plate 11 is in mating
engagement with the outer plate 12, and in the required orientation
relative thereto, the grooves 15, 18 together define the die orifices
20.  To ensure proper and permanent alignment of the grooves 15, 18
the outer peripheral edge of the plate 11 is provided with a radially
outwardly extending location lug 22 which is slidably engageable in a
channel 23 formed in the walls of the aperture 16 in the plate 12.  In
addition orifice holes 21 are formed in the support plate in
communication with the die orifices 20 respectively to allow passage
of shaped extrudate as it emerges from the orifice 20.

The following Examples are intended to illustrate, in detail,
a specific method for fabrication of the die assembly of said one
example,  as well as describing a typical extrusion operation.

EXAMPLE 1

Die Fabrication Technique

A two-piece die plate, 1/2" (1.3 cm) thick, was fabricated
using Delrin AF, a trademark of the DuPont Company for high-strength
thermoplastic of polyoxymethylene filled with polytetrafluoroethylene
fibers.  The inner circular plate 11, 2" (5.1 cm) in diameter with 10°
edge taper, was cut and attached to an aluminum block.  The fixture
was mounted on the rotary table of a milling machine with a slotter
attachment.  At the periphery of the inner plate, 17 shaped grooves 15
were cut with a shaping tool.  Next, an 8 inch (20.3 cm) diameter
outer plate 12 was cut and a central aperture 16 with a 10° taper
was bored so that the inner plate 11 would fit in the aperture.
Similarly, 17 shaped grooves 18 were cut at the inner edge of the
outer plate 12 by a milling machine and a slot for the alignment was
also provided.  In addition, six mounting holes 24 were drilled near
the outer edge of the outer plate 12.  Finally, a support plate 23,
which had seventeen orifices 20, six mounting holes 24 and four
retaining bolt holes 19', was fabricated using cold-rolled steel.  The
inner and outer plates and the support plate were assembled to form
the extrusion die as illustrated in the attached drawings.

Metals including brass, aluminum and stainless steels, and plastics, including acetal, nylon, phenolic, polyimide, polyester, may also be used to fabricate the extrusion die.

## EXAMPLE 2
### Extrusion Method

Aggregates of NaZSM-5 zeolite, 1564.7g, were mulled in a small batch mixer for 90 minutes to fine, uniform powders. To the zeolite, 997.0g of alpha monohydrate alumina was added and the composition was mixed and mulled for 20 minutes. Deionized water, 1438.3g, was then slowly added to the mix, after which mulling was continued for 30 minutes. By calculation, the extrusion mix contained 53% solids.

The mix was then fed at ambient temperature into the hopper of a 2" (5.1 cm) extruder, which had a screw length/diameter ratio of 10. A die plate with quadrulobe-shaped orifices, as described above, was used. The catalyst mix was compacted and mulled through the screw and extruded out of the die orifices.

Following the extrusion, the catalyst was dried overnight at 212°F (100°C) and stored. To make the finished catalyst, the dry extrudates were ammonium exchanged and then calcined in air.

CLAIMS:

1. An extrusion die comprising an outer plate and an inner plate, said inner plate being adapted to be in mating engagement and in fixed concentric orientation in a centrally located opening in said outer plate, said inner and outer plates having outer and inner edge surfaces respectively whicn define at least one orifice when said plates are in mating engagement and in concentric relation, and said inner and outer plates having interengageable location means for aligning said inner and outer plates to define said orifice in a predetermined shape and location.

2. A die as claimed in claim 1 wherein said locating means comprises a projection on one of the inner and outer plates and complementary opening on the other of said plates.

3. A die as claimed in Claim 2 wherein said projection is peripherally positioned on said inner plate and said opening is formed in the inner edge surface of the outer plate.

FIG.1

0154061

FIG. 2

FIG. 3

2/3

0154061

**FIG.4**

**FIG.5**

**FIG.6**

**FIG.4**

**FIG.5**

**FIG.6**